# EUROPEAN PATENT APPLICATION

(11) **EP 4 369 480 A1**
(43) Date of publication of application: **15.05.2024**
(21) Application number: 23204509.6
(22) Date of filing: 19.10.2023
(51) Int. Cl.: H01M 50/103, H01M 50/342, H01M 50/553

(54) **SECONDARY BATTERY**

(30) Priority: 09.11.2022 KR 20220148481
(71) Applicant: Samsung SDI Co., Ltd., Yongin-si, Gyeonggi-do 17084 (KR)
(72) Inventor: Lee, Hyun Soo, 17084 Yongin-si, Gyeonggi-do (KR)
(74) Representative: Gulde & Partner

(57) **Abstract**

A secondary battery (100) including: a case (110) having a safety vent (115); an electrode assembly (120) in the case (110); a pair of terminals (131, 132) electrically connected to the electrode assembly (120) and respectively coupled at opposite ends of the case (110); and an insulating member (140) wrapped around the case (110) and having with a stitch (141) in a region corresponding to the safety vent (115).

## Description

### BACKGROUND

### 1. Field

Aspects of embodiments of the present invention relate to a secondary battery.

### 2. Description of the Related Art

Different from a primary battery, which is not designed to be recharged, a secondary battery is designed be (re)charged and discharged. Low-capacity secondary batteries are used in portable small-sized electronic devices, such as a smart phone, a feature phone, a notebook computer, a digital camera, a camcorder and the like, while high-capacity secondary batteries are extensively used as an energy source for, as some examples, driving a motor for a hybrid car or an electric vehicle, a power storage cell, and the like. A secondary battery generally includes an electrode assembly including a cathode and an anode, a case accommodating the electrode assembly, and electrode terminals connected to the electrode assembly.

The above information disclosed in this Background section is for enhancement of understanding of the background of the present invention, and therefore, it may contain information that does not constitute prior art.

### SUMMARY

Embodiments of the present invention provide a secondary battery having a case with safety vent and an insulation member covering the case and avoiding a change in operating pressure of the safety vent by providing a stitch in a partial region of an insulating member attached to the safety vent.

A secondary battery, according to an embodiment of the present invention, includes: a case having a safety vent; an electrode assembly in the case; a pair of terminals electrically connected to the electrode assembly and respectively coupled at opposite ends of the case and; and an insulating member wrapped around the case and having a stitch in a region corresponding to the safety vent.

The safety vent may be on a short side of the case between the pair of terminals.

The stitch may be in a region of the insulating member corresponding to the safety vent on the short side of the case.

The case may have a pair of short sides and a pair of long sides, and the safety vent may be on any one of the pair of short sides.

The stitch may be in the region of the insulating member corresponding to the safety vent on any one of the pair of short sides of the case.

The case may further include a pair of cap plates coupled to both ends of the pair of short sides and the pair of long sides, respectively, through which the pair of terminals respectively pass through, and the insulating member may cover a region of at least one of the pair of cap plates.

The stitch may have a smaller size than the safety vent.

The stitch may extend in a longitudinal direction of the safety vent.

The stitch may be in a central region of the safety vent.

The stitch may be a plurality of perforations.

The insulating member may further include an adhesive layer on a surface thereof facing the case.

The insulating member may overlap and may be attached to a region of the case opposite to the safety vent.

The pair of terminals may include a cathode terminal on a first side of the case and an anode terminal on a second side of the case.

The cathode terminal may pass through and may be coupled to a cathode-side cap plate to be electrically connected to a cathode tab.

The anode terminal may pass through and may be coupled to an anode-side cap plate to be electrically connected to an anode tab.

All embodiments described in this specification may be advantageously combined with one another to the extent that their respective features are compatible. In particular, the expressions "according to an embodiment," "in an embodiment," "an embodiment of the invention provides" etc. mean that the respective features may or may not be part of specific embodiments of the present invention.

### BRIEF DESCRIPTION OF DRAWINGS

FIGS. 1A and 1B are a perspective view and a cross-sectional view of a secondary battery according to an embodiment of the present invention.
FIGS. 2A to 2G are schematic diagrams illustrating steps of a manufacturing method of a secondary battery according to an embodiment of the present invention.
FIGS. 3A and 3B are schematic diagrams illustrating a safety vent before and after bursting in a secondary battery without an insulating member according to a comparative example.
FIGS. 4A and 4B are schematic diagrams illustrating a safety vent before and after bursting in a secondary battery having an insulating member according to an embodiment of the present invention.
FIGS. 5A to 5D are schematic diagrams illustrating various types of stitches in a secondary battery according to embodiments of the present invention.

### DETAILED DESCRIPTION

Hereinafter, embodiments of the present invention will be described, in detail, with reference to the accompanying drawings. Embodiments of the present invention are provided to more completely explain the present invention to those skilled in the art, and the following embodiments may be modified in various other forms. In other words, the present invention may be embodied in many different forms and should not be construed as being limited to the embodiments set forth herein. Rather, these embodiments are provided so that this disclosure will be thorough and complete and will convey the aspects and features of the present invention to those skilled in the art. It will be understood that when an element or layer is referred to as being "on," "connected to," or "coupled to" another element or layer, it may be directly on, connected, or coupled to the other element or layer or one or more intervening elements or layers may also be present. When an element or layer is referred to as being "directly on," "directly connected to," or "directly coupled to" another element or layer, there are no intervening elements or layers present. For example, when a first element is described as being "coupled" or "connected" to a second element, the first element may be directly coupled or connected to the second element or the first element may be indirectly coupled or connected to the second element via one or more intervening elements.

In the figures, dimensions of the various elements, layers, etc. may be exaggerated for clarity of illustration. The same reference numerals designate the same elements. As used herein, the term "and/or" includes any and all combinations of one or more of the associated listed items. Further, the use of "may" when describing embodiments of the present invention relates to "one or more embodiments of the present invention." Expressions, such as "at least one of" and "any one of," when preceding a list of elements, modify the entire list of elements and do not modify the individual elements of the list. For example, the expression "at least one of a, b, or c" indicates only a, only b, only c, both a and b, both a and c, both b and c, all of a, b, and c, or variations thereof. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It will be understood that, although the terms first, second, third, etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (rotated 90 degrees or at other orientations), and the spatially relative descriptors used herein should be interpreted accordingly.

The terminology used herein is for the purpose of describing embodiments of the present invention and is not intended to be limiting of the present invention. As used herein, the singular forms "a" and "an" are intended to include the plural forms as well, unless the context clearly indicates otherwise. It will be further understood that the terms "includes," "including," "comprises," and/or "comprising," when used in this specification, specify the presence of stated features, integers, steps, operations, elements, and/or components but do not preclude the presence or addition of one or more other features, integers, steps, operations, elements, components, and/or groups thereof.

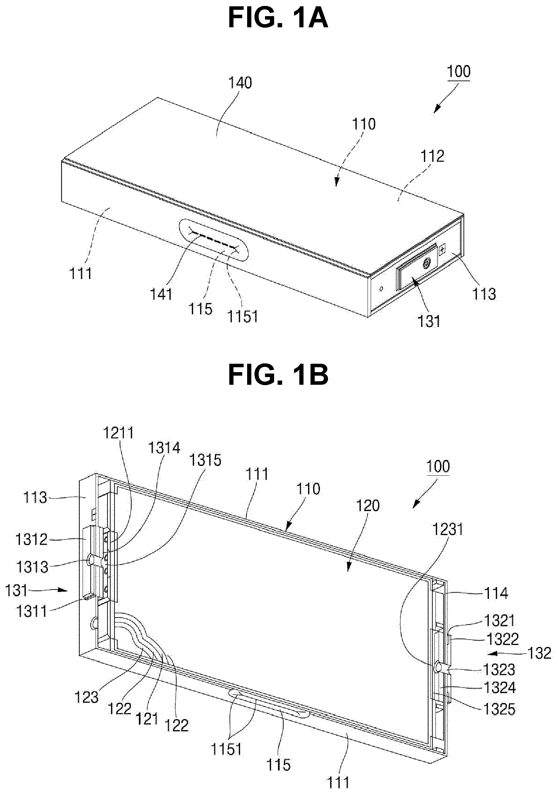

FIGS. 1A and 1B are a perspective view and a cross-sectional view of a secondary battery 100 according to an embodiment of the present invention.

As shown in FIGS. 1A and 1B, the secondary battery 100 according to an embodiment of the present invention includes a case 110, an electrode assembly 120, a pair of terminals 131 and 132, and an insulating member 140.

The case 110 may have a flat rectangular parallelepiped shape. In some embodiments, the case 110 includes a pair of short side portions 111 facing each other, a pair of long side portions 112 connecting (or extending between) the pair of short side portions 111, a cap plate 113 (e.g., a cathode-side cap plate 113) blocking (or closing) the short and long side portions 111 and 112 at one side of the case 110 and a cap plate 114 (e.g., an anode-side cap plate 114) blocking (or closing) the short and long side portions 111 and 112 at the other (e.g., the opposite) side of the case 110. In some embodiments, the cathode-side cap plate 113 may be laser-welded to the short and long side portions 111 and 112 at the one side. In some embodiments, the anode-side cap plate 114 may be laser-welded to the short and long side portions 111 and 112 at the other side. The case 110 may include, or may be referred to as, a can, an exterior material, a housing, or a body. In some embodiments, the case 110 may include aluminum, an aluminum alloy, iron, an iron alloy, an iron-nickel alloy, an iron-nickel-chromium alloy, or stainless steel. The case 110 may accommodate the electrode assembly 120 and an electrolyte and may protect the electrode assembly 120 and the electrolyte from the external environment.

In some embodiments, the case 110 may further include a safety vent 115 provided on at least one short side portion 111 of the pair of short side portions 111. The safety vent 115 may include, or may be referred to as, a safety valve, a safety valve, a membrane, or a thin section. In some embodiments, the length direction of (e.g., the largest dimension of) the safety vent 115 may be along (e.g., parallel to) the length direction of the short side portion 111, and the safety vent 115 may be provided at a center of the short side portion 111. In some embodiments, the safety vent 115 may have an approximately rectangular or oval shape. In some embodiments, the safety vent 115 has a thickness smaller than the short side portion 111 so that when the internal pressure of the case 110 becomes greater than a set (or reference) pressure or operating pressure, the internal gas (e.g., high-temperature and high-pressure gas) in the case 110 is discharged to the outside due to the safety vent 115 rupturing. In some embodiments, the safety vent 115 may include a relatively thinner line-shaped notch 1151 and, thus, can be more easily ruptured under the operating pressure. The notch 1151 may include, or may be referred to as, a concave groove, a groove, or a recess.

The electrode assembly 120 may include a cathode plate 121, a separator 122, and an anode plate 123. In some embodiments, the electrode assembly 120 may be provided in the form of a stack in which the cathode plate 121, the separator 122, the anode plate 123, and the separator 122 are stacked in this order or are rolled in the form of a jelly roll. The electrode assembly 120 may generally have a rectangular parallelepiped shape to be accommodated in the case 110. The electrode assembly 120 may include, or may be referred to as, an electrode group, an electrode, or a cell. In some embodiments, the cathode plate 121 may further include a cathode tab 1211 (or cathode multi-tab) protruding toward and connected to the terminal 131 on one side, and the anode plate 123 may further include an anode tab 1231 (or an anode multi-tap) protruding toward and connected to the anode terminal 132 on the other side opposite to one side. The electrode assembly 120 may be connected to an external charging device to charge electrical energy or connected to an external electrical device to discharge electrical energy.

The pair of terminals 131 and 132 may include a cathode terminal 131 on one side and an anode terminal 132 on the other side. The terminals 131 and 132 may include, or may be referred to as, a side terminal, a terminal board, or a terminal unit. In some embodiments, the cathode may be referred to as a positive electrode. In some embodiments, the anode may be referred to as a negative electrode.

In some embodiments, the cathode terminal 131 may pass through and be coupled to the cathode-side cap plate 113 to be electrically connected to the cathode tab 1211. In some embodiments, the cathode terminal 131 may be insulated from the cathode-side cap plate 113 by an insulating gasket 1311. In some embodiments, the cathode terminal 131 may include an outer cathode terminal plate 1312 positioned outside the cathode-side cap plate 113, a cathode pillar 1313 penetrating (or extending through) the cathode-side cap plate 113, and an inner cathode terminal plate 1314 positioned inside the cathode-side cap plate 113. In some embodiments, the inner cathode terminal plate 1314 may be electrically connected to the cathode tab 1211 through a cathode lead 1315.

In some embodiments, the anode terminal 132 may pass through and be coupled to the anode-side cap plate 114 to be electrically connected to the anode tab 1231. In some embodiments, the anode terminal 132 may be insulated from the anode-side cap plate 114 by an insulating gasket 1321. In some embodiments, the anode terminal 132 may include an outer anode terminal plate 1322 positioned outside the anode-side cap plate 114, an anode pillar 1323 penetrating (or extending through) the anode-side cap plate 114, and an inner anode terminal plate 1324 positioned inside the anode-side cap plate 114. In some embodiments, the inner anode terminal plate 1324 may be electrically connected to the anode tab 1231 through an anode lead 1325.

The cathode terminal 131 and the anode terminal 132 may be connected to a charger to provide (e.g., to charge) electrical energy to the electrode assembly 120 or may be connected to an electrical device to provide (e.g., to discharge) electrical energy of the electrode assembly 120 to the electrical device.

A bus bar may be connected to the cathode terminal 131 and the anode terminal 132 such that a plurality of secondary batteries 100 (or battery cells) are electrically connected in series and/or parallel to provide a battery module or battery pack. In some embodiments, the cathode terminal 131 may be directly electrically connected to the anode terminal 132 of another secondary battery 100 without a bus bar, and the anode terminal 132 thereof may be directly connected to the cathode terminal 131 of another secondary battery 100 without a bus bar.

The insulating member 140 may cover the case 110. The insulating member 140 may cover the pair of short side portions 111 and the pair of long side portions 112 of the case 110. In some embodiments, the insulating member 140 may cover a portion of the cathode-side cap plate 113 and/or a portion of the anode-side cap plate 114. In some embodiments, the insulating member 140 may expose a portion of the cathode-side cap plate 113 and/or a portion of the anode-side cap plate 114 to the outside. In some embodiments, the insulating member 140 may expose a portion of the cathode terminal 131 and a portion of the anode terminal 132 to the outside. The insulating member 140 may include, or may be referred to as, an insulating tape or an insulating film. The insulating member 140 may include polypropylene (PP), polyethylene (PE), polycarbonate (PC), polyethylene terephthalate (PET), polystyrene (PS), or polyimide (PI). The insulating member 140 insulates the secondary battery 100 from other external electrical components or devices.

In some embodiments, the insulating member 140 may include a stitch 141 in the form of a substantially straight line provided in a region corresponding to (e.g., overlapping or aligned with) the safety vent 115. The stitch 141 may include, or may be referred to as, multiple perforations, multiple punching holes, multiple through holes, or multiple holes. In some embodiments, the planar shape of holes can be approximately rectangular or circular.

In some embodiments, when the safety vent 115 is provided on the short side portion 111 of the case 110 between the pair of terminals 131 and 132, the stitch 141 may also be provided in a partial region of the insulating member 140 between the pair of terminals 131 and 132. In some embodiments, the stitch 141 may have a smaller size than the safety vent 115. In some examples, the stitch 141 may be provided along the length of the safety vent 115. In some embodiments, the stitch 141 may be provided in (e.g., may overlap) the central region of the safety vent 115. Although the stitch 141 is shown as being in the form of one line, the stitch 141 may be provided in the form of a plurality of lines. When the safety vent 115 operates (or bursts), the stitch 141 allows the safety vent 115 to operate normally (e.g., prevents the insulating member 140 from interfering with the operation of the safety vent 115). For example, the stitch 141 maintains the operating pressure of the safety vent 115 in the same state as when the insulating member 140 is not present (e.g., the stitch 141 prevents the set or reference pressure of the safety vent 115 from being increased).

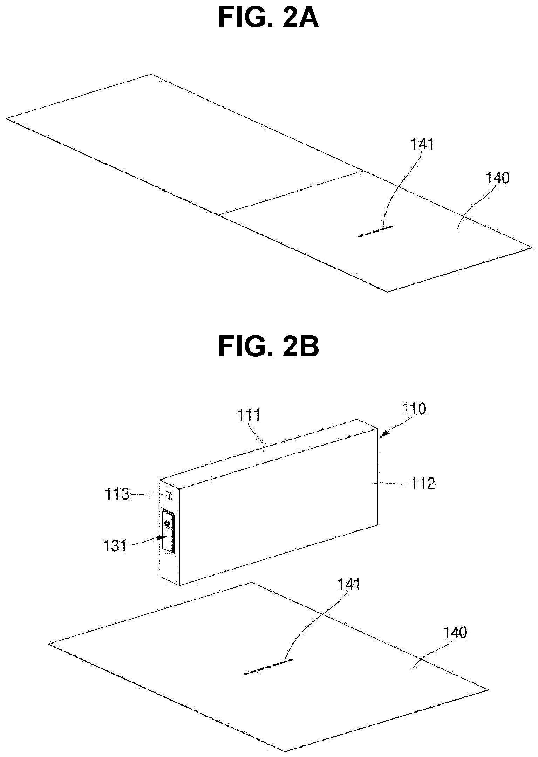

FIGS. 2A to 2G are schematic diagrams illustrating steps of a manufacturing method of the secondary battery 100 according to an embodiment of the present invention.

As shown in FIG. 2A, the insulating member 140 may be provided. The insulating member 140 may be a substantially rectangular-shaped tape or film, and the stitch 141 may be provided in a partial region thereof. As described above, the stitch 141 may include a plurality of through holes arranged in a line. In addition, as described above, the stitch 141 may be provided in a region corresponding to the safety vent 115 provided in the case 110 of the secondary battery 100, which is provided at a later step. In some embodiments, the stitch 141 may be applied by (or formed by) a laser beam or a mechanical punch. In some embodiments, the insulating member 140 may include an adhesive layer on the entire area or a partial area at the end of the insulating member 140.

As shown in FIG. 2B, the insulating member 140 may be cut to an appropriate size, and the secondary battery 100 (or battery cell) may be seated on the insulating member 140. In some embodiments, the lower short side portion 111 of the case 110 of the secondary battery 100 may be seated on the insulating member 140. In some embodiments, the safety vent 115 provided on the lower short side portion 111 may correspond to (e.g., may be aligned with) the stitch 141 in the insulating member 140. In some embodiments, the safety vent 115 may be seated on the stitch 141.

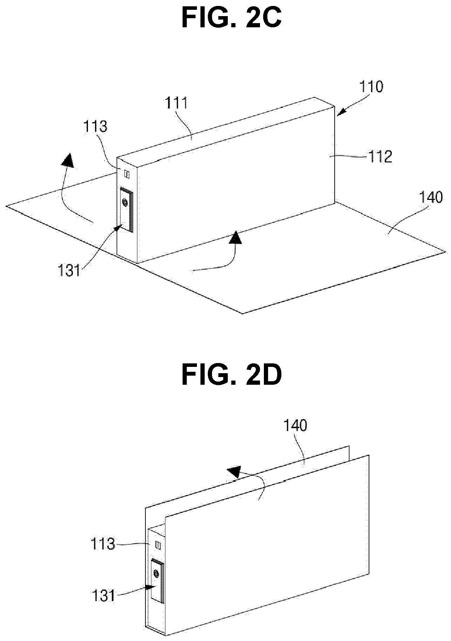

As shown in FIG. 2C, the insulating member 140 may be attached to the long side portion 112 of the case 110 of the secondary battery 100. In some embodiments, an adhesive layer may also be provided on a partial region of the insulating member 140 corresponding to the long side portion 112 of the case 110.

As shown in FIG. 2D, the insulating member 140 may be attached to the upper short side portion 111 of the case 110 of the secondary battery 100. In some embodiments, one side region of the insulating member 140 may be attached to the upper short side portion 111 of the case 110. In some embodiments, an adhesive layer may be provided on one side of the insulating member 140 and attached to the upper short side portion 111.

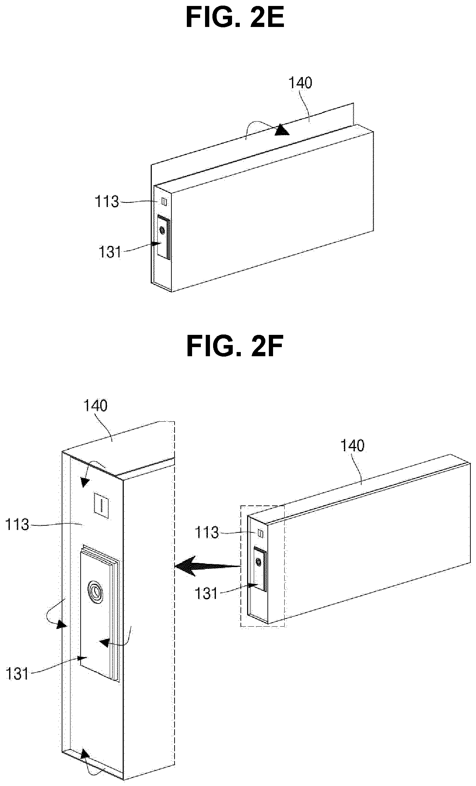

As shown in FIG. 2E, a region of the other side of the insulating member 140 may be attached to a region of one side of the insulating member 140. In some embodiments, an adhesive layer may be provided on the region of the other side of the insulating member 140 and adhered to the region of one side of the insulating member 140. In some embodiments, the insulating member 140 may overlap and adhere to the short side portion 111 of the case 110 opposite to the safety vent 115.

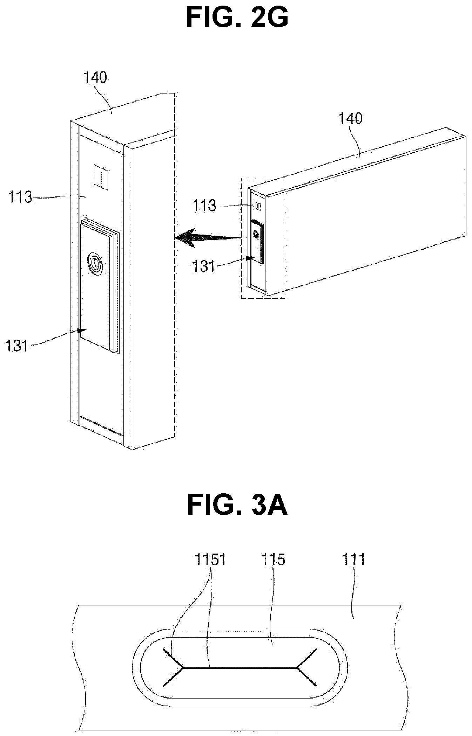

As shown in FIGS. 2F and 2G, side regions of the insulating member 140 may be attached to at least some regions of the cap plates 113 and 114. In some embodiments, portions of the insulating member 140 corresponding to the pair of short side portions 111 may extended to be bent and attached to portions of the cap plates 113 and 114. In some embodiments, portions of the insulating member 140 corresponding to the pair of long side portions 112 may extend to be bent and attached to portions of the cap plates 113 and 114. In some embodiments, some regions of the insulating member 140 may be attached to the circumferential regions (e.g., square line-shaped circumferential regions) of the cap plates 113 and 114. In some embodiments, adhesion between some regions of the insulating member 140 and some regions of the cap plates 113 and 114 may be implemented by (or provided by) an adhesive layer. In some embodiments, when the insulating member 140 is a heat-shrinkable film, the insulating member 140 may be shrunk by heat (e.g., quick or instantaneous application of heat) in a range of approximately 100 °C to approximately 200 °C and may be attached to some regions of the cap plates 113 and 114. Attachment of the insulating member 140 to the regions of the side portions 111 and 112 may be performed on the cap plates 113 and 114 respectively provided on the left and right sides.

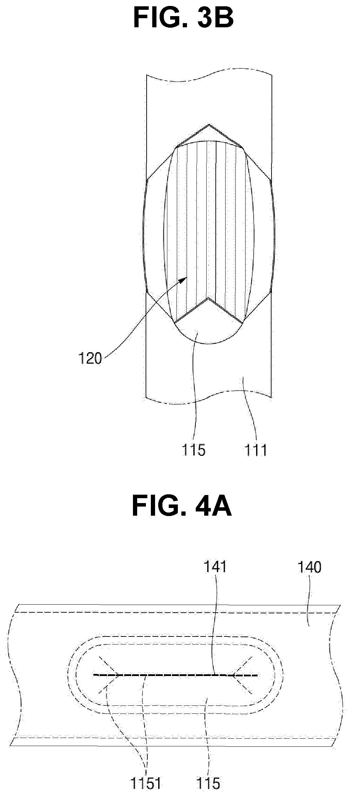

FIGS. 3A and 3B are schematic diagrams illustrating operation of a safety vent 115 in a secondary battery without the insulating member 140 according to a comparative example.

As shown in FIG. 3A, the safety vent 115 may be provided on the short side portion 111 of the case 110 of the secondary battery 100. The safety vent 115 may have a relatively small thickness compared to the short side portion 111. The safety vent 115 may have an approximately elliptical shape, and various types of notches 1151 may be provided in the surface of the safety vent 115 to initiate rupture starts during operation.

As shown in FIG. 3B, as the notch 1151 ruptures during operation of the safety vent 115, the safety vent 115 may open in an outer direction of (e.g., away from) the case 110, that is, in an outer direction of the short side portion 111. In some embodiments, due to the shape of the notch 1151, the safety vent 115 may be separated into approximately four pieces (e.g., two large pieces and two small pieces) and opened in the outer direction of the case 110.

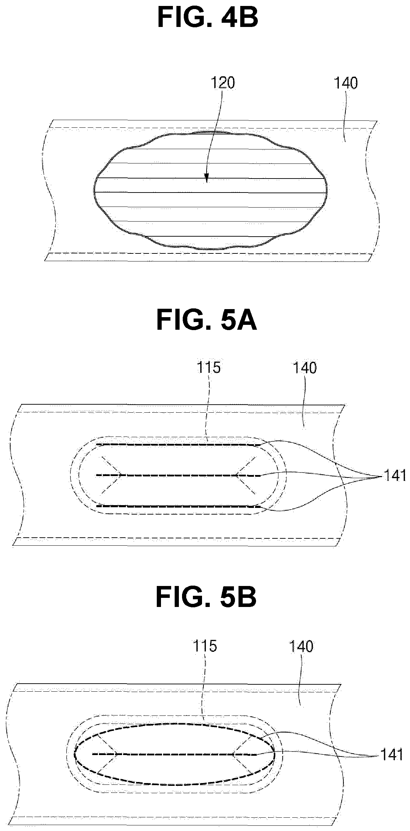

FIGS. 4A and 4B are schematic diagrams illustrating operation of a safety vent 115 in the secondary battery 100 which has an insulating member 140 according to an embodiment of the present invention.

As shown in FIG. 4A, the stitch 141 of the insulating member 140 may be provided in a region corresponding to the safety vent 115. In some embodiments, the stitch 141 may be provided in a longitudinal direction of the safety vent 115. In some embodiments, the stitch 141 may have a smaller size than the safety vent 115. In some embodiments, the stitch 141 may be provided in (e.g., to overlap) the central region of the safety vent 115. In some embodiments, the stitch 141 may include multiple perforations or through holes. In some embodiments, the stitch 141 may be in the form of a dotted line.

In some embodiments, the stitch 141 may be the same as or similar to the shape of the notch 1151 provided in the safety vent 115. Therefore, when the notch 1151 starts to rupture, the stitch 141 also starts to rupture in the same shape, and accordingly, the operation of the safety vent 115 can be performed smoothly.

As shown in FIG. 4B, a partial region of the insulating member 140 is torn starting from the stitch 141 during operation of the safety vent 115 and eventually may be opened in a substantially circular shape corresponding to the open shape of the safety vent 115. In some embodiments, a partial region of the insulating member 140 may open in an elliptical shape. In some embodiments, a partial region of the insulating member 140 may open in a substantially elliptical shape while being melted by the high-temperature and high-pressure gas discharged through the safety vent 115 after it ruptures.

Accordingly, in embodiments of the present invention, the stitch 141 is provided in a partial region of the insulating member 140 attached to the safety vent 115, and thus, the operating pressure of the safety vent 115 is not affected or changed by the insulation member 140, thereby providing the secondary battery 100 having no change in operating pressure of the safety vent 115.

FIGS. 5A to 5D are schematic diagrams illustrating various types of stitches 141 in the secondary battery 100 according to embodiments of the present invention.

As shown in FIG. 5A, the stitch 141 may be provided in the form of a plurality of dotted lines. In some embodiments, multiple stitches 141 may be provided along the length of the safety vent 115. In some embodiments, one central stitch 141 may be provided in a region corresponding to the notch 1151, and two outer stitches 141 may be provided in a region corresponding to the circumference of the safety vent 115. In some embodiments, the plurality of stitches 141 may have a smaller size than the safety vent 115.

As shown in FIG. 5B, the stitch 141 may be provided in a dotted line shape or a dotted line ellipse shape. In some embodiments, the stitch 141 in the form of a dotted line may be provided in a region corresponding to a notch, and the stitch 141 in the form of a dotted line ellipse may be provided in a region corresponding to the circumference of a safety vent. In some embodiments, the stitches 141 in the form of a dotted line and a dotted line ellipse may have a smaller size than the safety vent 115.

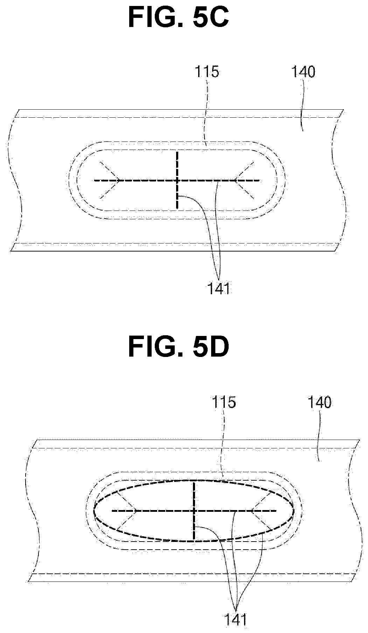

As shown in FIG. 5C, the stitch 141 may be provided in the form of a dotted cross. In some embodiments, the cruciform stitch 141 may have a smaller size than the safety vent 115.

As shown in FIG. 5D, the stitch 141 may be provided in the form of a dotted line cross and a dotted line ellipse. In some embodiments, the stitches 141 in the form of a dotted cross and a dotted line ellipse may have a smaller size than the safety vent 115.

The stitch 141 may be provided in various forms, and the shape of the stitch 141 is not limited to any specific form described in the present invention. However, to prevent the safety vent from directly electrically contacting other parts (or components) located outside the secondary battery 100, the size of the stitch 141 may be smaller than that of the safety vent.

Accordingly, in embodiments of the present invention, various types of stitches 141 are provided to some regions of the insulating member 140 attached to the safety vent 115, thereby electrically insulating a secondary battery without changing the operating pressure of the safety vent 115. As an example, the stitch 141 may have the form of one or more straight lines, ellipses, or crosses and may be provided to a partial region of the insulating member 140 that blocks (or covers) the safety vent 115, thereby preventing the insulating member 140 from interfering with the operation of the safety vent 115. A partial region of the insulating member 140 that blocks the safety vent 115 may be easily ruptured by the high-temperature, high-pressure gas discharged when the safety vent 115 ruptures, and thus, the safety vent 115 and the insulating member 140 can be opened together.

According to embodiments of the present invention, by providing a plurality of stitches in a partial region of an insulating member attached to a safety vent, an electrically insulated secondary battery is provided with no change in operating pressure of the safety vent.

Embodiments of the present invention provide a stitch in which a plurality of through holes are formed in a straight-line shape in a partial region of an insulating member that blocks a safety vent, thereby preventing the partial region of the insulating member from interfering with the operation of the safety vent.

In embodiments of the present invention, a partial region of an insulating member that blocks a safety vent may be easily ruptured by high-temperature, high-pressure gas released when the safety vent ruptures, and thus, can be opened together with the safety vent.

The foregoing embodiments are only some embodiments for carrying out the secondary battery according to the present invention, which is not limited to the embodiment. Accordingly, it will be understood by a person skilled in the art that various changes in form and details may be made therein without departing from the scope of the present invention as defined by the following claims and their equivalents.

It is clear for one of ordinary skill in the art that the disclosed embodiments can be combined where possible.

## Claims

1. A secondary battery (100) comprising:
a case (110) having a safety vent (115);
an electrode assembly (120) in the case (110);
a pair of terminals (131, 132) electrically connected to the electrode assembly (120) and respectively coupled at opposite ends of the case (110); and
an insulating member (140) wrapped around the case (110) and having with a stitch (141) in a region corresponding to the safety vent (115).

2. The secondary battery (100) of claim 1, wherein the safety vent (115) is on a short side (111) of the case (110) between the pair of terminals (131, 132).

3. The secondary battery (100) of claim 2, wherein the stitch (141) is in the region of the insulating member (140) corresponding to the safety vent (115) provided on the short side (111) of the case (110).

4. The secondary battery (100) of claim 1, wherein the case (110) has a pair of short sides (111) and a pair of long sides (112), and
wherein the safety vent (115) is on any one of the pair of short sides (111).

5. The secondary battery (100) of claim 4, wherein the stitch (141) is in the region of the insulating member (140) corresponding to the safety vent (115) on one of the pair of short sides (111) of the case (110).

6. The secondary battery (100) of claim 4 or 5, wherein the case (110) comprises a pair of cap plates (113, 114) respectively coupled to opposite ends of the pair of short sides (111) and the pair of long sides (112),
wherein the pair of terminals (131, 132) respectively pass through the pair of cap plates (113, 114), and
wherein the insulating member (140) covers a partial region of at least one of the pair of cap plates (113, 114).

7. The secondary battery (100) of any one of the preceding claims, wherein the stitch (141) has a smaller size than the safety vent (115).

8. The secondary battery (100) of any one of the preceding claims, wherein the stitch (141) extends in a longitudinal direction of the safety vent (115).

9. The secondary battery (100) of any one of the preceding claims, wherein the stitch (141) is over a central region of the safety vent (115).

10. The secondary battery (100) of any one of the preceding claims, wherein the stitch (141) is a plurality of perforations.

11. The secondary battery (100) of any one of the preceding claims, wherein the insulating member (140) further comprises an adhesive layer on a surface thereof facing the case (110).

12. The secondary battery (100) of any one of the preceding claims, wherein the insulating member (140) overlaps and is attached to a region of the case (110) opposite to the safety vent (115).

13. The secondary battery (100) of any one of the preceding claims, wherein the pair of terminals (131, 132) includes a cathode terminal (131) on a first side of the case (110) and an anode terminal (132) on a second side of the case (120).

14. The secondary battery (100) of claim 13, wherein the cathode terminal (131) passes through and is coupled to a cathode-side cap plate (113) to be electrically connected to a cathode tab (1211).

15. The secondary battery (100) of claim 13 or 14, wherein the anode terminal (132) passes through and is coupled to an anode-side cap plate (114) to be electrically connected to an anode tab (1231).
